(19) **Europäisches Patentamt / European Patent Office / Office européen des brevets**

(11) **EP 1 480 023 B1**

(12) **EUROPÄISCHE PATENTSCHRIFT**

(45) Veröffentlichungstag und Bekanntmachung des Hinweises auf die Patenterteilung:
**07.07.2010 Patentblatt 2010/27**

(51) Int Cl.:
**G01F 25/00** (2006.01)     **G01R 31/28** (2006.01)
**G01F 23/296** (2006.01)

(21) Anmeldenummer: **04011707.9**

(22) Anmeldetag: **18.05.2004**

(54) **Messgerät mit Vorrichtung zur Erkennung des angeschlossenenen Ultraschallsensors**

Measurement device with apparatus for recognition of connected ultrasonic sensor

Appareil de mesure avec dispositif pour l'identification d'un capteur ultrasonore connecté

(84) Benannte Vertragsstaaten:
**DE FR GB IT**

(30) Priorität: **20.05.2003 DE 10323062**

(43) Veröffentlichungstag der Anmeldung:
**24.11.2004 Patentblatt 2004/48**

(73) Patentinhaber: **Endress + Hauser GmbH + Co. KG**
**79689 Maulburg (DE)**

(72) Erfinder:
• **Spanke, Dietmar, Dr.**
**79585 Steinen (DE)**
• **Steltner, Holger, Dr.**
**79110 Freiburg (DE)**

• **Peter, Fabrice**
**68730 Blotzheim (FR)**
• **Ottenbreit, Bernhard**
**79739 Schörstadt (DE)**

(74) Vertreter: **Andres, Angelika Maria et al**
**Endress+Hauser (Deutschland) AG+Co. KG**
**PatServe**
**Colmarer Strasse 6**
**79576 Weil am Rhein (DE)**

(56) Entgegenhaltungen:
DE-A- 4 232 719     US-A- 4 467 271
US-A- 5 625 343     US-A1- 2003 038 644

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## EP 1 480 023 B1

**Beschreibung**

Die Erfindung betrifft ein Füllstandsmeßgerät mit einer Meßgerätelektronik, an die Ultraschallsensoren mit unterschiedlichen Resonanzfrequenzen anschließbar sind.

Meßgeräte mit Ultraschallsensoren werden in einer Vielzahl von Anwendungen eingesetzt. Ultraschallsensoren werden z.B. als Sender und/oder Empfänger in Füllstandsmeßgeräten zur Entfernungsmessung nach dem Echolotprinzip verwendet.

Mit Füllstandsmeßgeräten lassen sich unter anderem Füllstände eines Füllgutes z.B. in einem Behälter oder in einem offenen Gerinne messen. Dabei wird ein vom Ultraschallsensor ausgesendetes Signal, z.B. ein kurzer Ultraschallwellenpuls, in Richtung des Füllgutes gesendet und an der Oberfläche des Füllgutes reflektiert. Die Laufzeit des Pulses vom Sensor zur Oberfläche und zurück wird ermittelt und daraus der Füllstand bzw. die Füllhöhe bestimmt.

Derartige Meßgeräte werden in vielen Industriezweigen, z.B. in der Lebensmittelindustrie, der Wasser- und Abwasserbranche und in der Chemie, eingesetzt.

Je nach gewünschter Sendeleistung und Reichweite werden Ultraschallsensoren mit unterschiedlichen Resonanzfrequenzen eingesetzt. Typischerweise liegen die Resonanzfrequenzen in einem Bereich von 1 kHz bis 200 kHz.

Meßgeräte weisen daher vorteilhafterweise eine Meßgerätelektronik auf, an die verschiedene Ultraschallsensoren anschließbar sind.

Bevor das Meßgerät in Betrieb genommen werden kann, muß festgestellt werden, welcher Ultraschallsensor angeschlossen ist. Dies geschieht vorzugsweise automatisch, indem das Meßgerät mit einer Vorrichtung zur Erkennung des angeschlossenen Ultraschallsensors ausgestattet ist, die diese Aufgabe übernimmt.

Bei herkömmlichen Meßgeräten werden Ultraschallsensoren daher z.B. mit einem Kennungswiderstand ausgestattet. Beim Anschließen des Ultraschallsensors wird zugleich der Kennungswiderstand an eine Widerstandsmeßschaltung angeschlossen, die anhand des Widerstandswertes des Kennungswiderstandes den angeschlossenen Ultraschallsensor erkennt.

Dieses Verfahren ist jedoch sehr aufwendig. Es muß der Widerstand bereitgestellt werden und es müssen zwei Anschlußleitungen für den Kennungswiderstand vorgesehen und angeschlossen werden.

Hinzu kommt, daß Ultraschallsensoren ohne Kennungswiderstand nicht erkannt werden können.

Aus der DE 42 32 719 A ist ein Vibrations-Füllstands-Grenzschalter bekannt geworden, der als Abtriebselement ein piezoelektrisches Element verwendet. Der Füllstands-Grenzschalter ist so ausgestaltet, dass er das Testen seiner wesentlichen Komponenten durch den Einsatz eines Referenz-Bandfilters sowie das fälschungssichere Übertragen von Test- und Meßwerten ermöglicht. Der Testbefehl wird durch die Amplitudensteuerung des zwischen dem Grenzschalter und einem entfernt angeordneten Auswertegerät auf einer Zweidrahtleitung fließenden Stroms auf einen außerhalb des Meßstrombereichs liegenden Wert gebildet. Der Wert liegt bevorzugt oberhalb des Eigenstrombedarfs des Grenzschalters.

Es ist eine Aufgabe der Erfindung ein Meßgerät anzugeben, an das auf einfache Weise unterschiedliche Ultraschallsensoren anschließbar sind.

Die Aufgabe wird durch ein Füllstandsmeßgerät beschrieben, das die Merkmale des Anspruch 1 aufweist.

Gemäß einer Ausgestaltung des erfindungsgemäßen Füllstandsmeßgeräts besteht eine Verbindung zwischen dem Ultraschallsensor und der Meßgerätelektronik, über die

- der Ultraschallsensor im Meßbetrieb angeschlossen ist.

Gemäß einer vorteilhaften Weiterbildung wird bezüglich des erfindungsgemäßen Füllstandsmeßgerät ein Verfahren angewendet, das im Anspruch 3 beschrieben ist. Weiterhin zeichnet sich das Verfahren dadurch aus,

- der Ultraschallsensor mit einer vorgegebenen Frequenz und einer vorgegebenen Amplitude zu Schwingungen angeregt wird,
- nach einer festen Zeit nach Beenden der Anregung die Amplitude der Schwingung des Ultraschallsensors aufgenommen wird und
- anhand der Amplitude der Ultraschallsensor bestimmt wird, indem die Amplitude mit in einer Tabelle abgelegten sensorspezifischen Amplituden verglichen wird.

Alternativ wird

- der Ultraschallsensor zu Schwingungen angeregt wird,
- nach Beenden der Anregung eine Entwicklung der Amplitude der Schwingung des Ultraschallsensors aufgenommen wird,
- aus der Entwicklung eine Abklingzeit mit der die Amplitude exponentiell abnimmt bestimmt wird, und

- mittels der Abklingzeit der Ultraschallsensor bestimmt wird, indem die Abklingzeit mit in einer Tabelle abgelegten sensorspeziflschen Abklingzeiten verglichen wird.

Alternativ ist vorgesehen, daß

- der Ultraschallsensor zu Schwingungen angeregt wird und daß
- nach Beenden der Anregung eine Frequenz oder eine Periodendauer der Schwingung des Ultraschallsensors aufgenommen wird.

Weiterhin ist vorgesehen, daß

- der Ultraschallsensor mit einer vorgegebenen Frequenz und einer vorgegebenen Amplitude zu Schwingungen angeregt wird,
- nach Beenden der Anregung die Signale des Ultraschallsensor für einen vorgegebenen Zeitraum aufgenommen werden, und
- daraus ein Maß für eine Schwingungsenergie des Ultraschallsensors während dieses Zeitraums abgeleitet wird,
- anhand dessen der Ultraschallsensor erkannt wird.

Gemäß einer Ausgestaltung des letztgenannten Verfahrens werden die Signale gleichgerichtet werden, und es wird ein Integral über die gleichgerichteten Signale oder eine die gleichgerichteten Signale Einhüllende berechnet.
Gemäß einer Ausgestaltung des Füllstandsmeßgeräts

- umfaßt die Vorrichtung eine Einrichtung, durch die der angeschlossene Ultraschallsensor zu Schwingungen anregbar ist und
- weist für jeden Ultraschallsensor, den sie erkennen kann, einen zugeordneten Testzweig auf, an den vom jeweils angeschlossenen Ultraschallsensor aufgenommene Signale anlegbar sind, wobei
- jeder Testzweig einen Bandpassfilter aufweist, der für eine Resonanzfrequenz des zugeordneten Ultraschallsensor durchlässig ist, und
- jeder Testzweig eine Aufnahmeeinheit aufweist, die durch den Bandpassfilter hindurch gelangende Signale aufnimmt.

Die Erfindung und weitere Vorteile werden nun anhand der Figuren der Zeichnung, in denen zwei Ausführungsbeispiele dargestellt sind, näher erläutert; gleiche Elemente sind in den Figuren mit gleichen Bezugszeichen versehen.

Fig. 1    zeigt einen Längsschnitt durch ein Meßgerät mit einem Ultraschallsensor;

Fig. 2    zeigt einen Schaltplan einer Meßgerätelektronik mit einem digitalen Signalprozessor; und

Fig. 3    zeigt einen Schaltplan einer Meßgerätelektronik mit einer Sendesignalerzeugung und einer Empfangsschaltung.

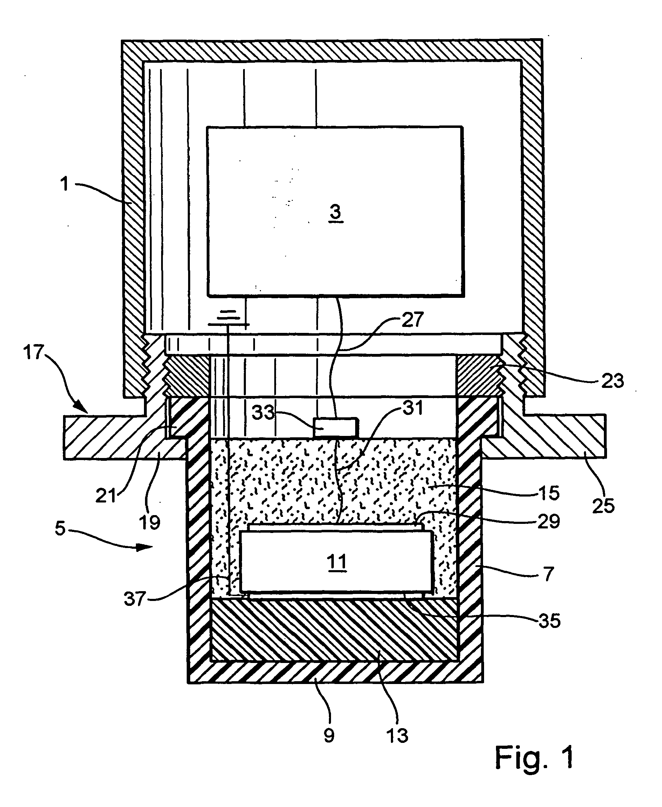

Fig. 1 zeigt einen Längsschnitt durch ein erfindungsgemäßes Meßgerät. Es umfaßt ein Meßgerätgehäuse 1, in dem eine Meßgerätelektronik 3 angeordnet ist. Das Meßgerätgehäuse 1 besteht aus Metall, z.B. aus einem Edelstahl.
An das Meßgerät ist ein Ultraschallsensor 5 angeschlossen.
Der Ultraschallsensor 5 weist ein topfförmiges Gehäuse 7 auf, das von einem Boden 9 abgeschlossenen ist.
Das Gehäuse 7 besteht aus einem Kunststoff, z.B. aus Polypropylen. In dem Gehäuse 7 ist ein piezoelektrisches Element 11 angeordnet, das zur Erzeugung und/oder Aufnahme von Ultraschall durch den Boden 9 hindurch dient.
Da sich die akustische Impedanz des Mediums, in das der Ultraschall auszusenden ist, z.B. Luft, und die des piezoelektrischen Elements 11 sehr stark unterscheiden, ist vor dem piezoelektrischen Element 11 eine Anpaßschicht 13 aus einem Kunststoff mit mittlerer akustischer Impedanz angeordnet. Als Kunststoff ist z.B. ein Epoxidharz geeignet. In dem dargestellten Ausführungsbeispiel ist das piezoelektrische Element 11 scheibenförmig. Die Anpaßschicht 13 ist ebenfalls scheibenförmig und befindet sich zwischen dem piezoelektrischen Element 11 und dem Boden 9 des Gehäuses 7.
Um eine möglichst gute Anpassung und damit einen möglichst hohen Schalldruck zu erzielen weist die Anpaßschicht 13 vorzugsweise eine Dicke auf, die einem viertel der Wellenlänge der erzeugten Schall- oder Ultraschalwellen entspricht.
Bei einem Ultraschallsensor 5, der nicht nur als Sender, sondern auch als Empfänger genutzt wird, ist es wichtig, daß eine einmal angeregte Sendeschwingung schnell abklingt. Erst nach einem vollständigen Abklingen der Sendeschwingung ist der Ultraschallsensor empfangsbereit. Um ein schnelles Abklingen der Sendeschwingung zu erzielen ist in dem Gehäuse 7 daher vorzugsweise ein Dämpfungsmaterial 15 vorgesehen. Das Dämpfungsmaterial 15 ist z.B. ein Verguß, beispielsweise ein Silikongel, der das Gehäuse 7 ausfüllt.

Das Meßgerät ist modular aufgebaut. Hierzu ist der Ultraschallsensor 5 in eine Halterung 17 eingefaßt. Die Halterung 17 weist einen zylindrischen Abschnitt auf, an den endseitig eine sich radial nach innen erstreckende Schulter 19 angeformt ist. Das Gehäuse 7 weist an dessen vom Boden 9 abgewandten Ende einen sich radial nach außen erstreckenden Absatz 21 auf, der auf der Schulter 19 aufliegt. Im Inneren der Halterung 17 ist ein Innengewinde vorgesehen, in das ein Druckring 23 eingeschraubt ist. Der Druckring 23 liegt auf dem Absatz 21 auf und fixiert so das Gehäuse 7 in der Halterung 17. Das Meßgerätgehäuse 1 ist außen auf den zylindrischen Abschnitt der Halterung 17 aufgeschraubt. Zusätzlich ist an die Halterung 17 ein sich radial nach außen erstreckender Flansch 25 angeformt, mit dem das Meßgerät an einem Einsatzort montierbar ist. Selbstverständlich sind auch andere modulare Ausgestaltungen möglich.

Die Meßgerätelektronik 3 ist über eine Verbindung 27 an den Ultraschallsensor 5 angeschlossen. Hierfür ist auf dem piezoelektrischen Element 11 auf dessen meßgerätelektronik-zugewandten Stirnfläche eine scheibenförmige Anschlußelektrode 29 vorgesehen, an die eine Leitung 31 angeschlossen ist, die zu einem am offenen Ende des Gehäuses 7 angeordneten Steckverbinder 33 führt. Die Verbindung 27 führt von der Meßgerätelektronik 3 zum Steckverbinder 33.

Während bei herkömmlichen Meßgeräten mit Kennwiderständen zusätzlich zum Kennwiderstand führende Verbindungsleitungen erforderlich sind, genügt bei dem erfindungsgemäßen Meßgerät die Verbindung 27 zwischen der Meßgerätelektronik 3 und dem Ultraschallsensor 5. Über diese Verbindung 27 erfolgt sowohl die Erkennung des angeschlossenen Ultraschallsensors 5 als auch der Anschluß des Ultraschallsensors 5 im Meßbetrieb.

Auf einer der Anpaßschicht 13 zugewandten Stirnfläche des piezoelektrischen Elements 11 ist eine weitere Elektrode 35 vorgesehen, an die eine Verbindungsleitung 37 angeschlossen ist. Über die Verbindungsleitung 37 ist die Elektrode 35 an Masse oder an ein festes Bezugspotential angeschlossen.

Die Meßgerätelektronik 3 dient der Ansteuerung des Ultraschallsensors 5. Dabei kann die Meßgerätelektronik 3 sowohl beim Senden als auch beim Empfang von Ultraschallsignalen eingesetzt werden.

Ein angeschlossener Ultraschallsensor 5 ist austauschbar, indem er einfach mechanisch vom Meßgerätgehäuse 1 gelöst und durch einen anderen Ultraschallsensor 5 ersetzt wird.

An die Meßgerätelektronik 3 sind je nach Anwendung unterschiedliche Ultraschallsensoren 5 anschließbar. Die anschließbaren Ultraschallsensoren 5 unterscheiden sich durch sensorspezifische Größen, wie z.B. deren Resonanzfrequenz.

Damit die Meßgerätelektronik 3 den angeschlossenen Ultraschallsensor 5 erkennt, ist eine Vorrichtung zur Erkennung des angeschlossenen Ultraschallsensors 5 vorgesehen, die zur Erkennung des Ultraschallsensors 5 den Ultraschallsensor 5 in Schwingung versetzt, dessen Schwingverhalten aufnimmt und daraus eine sensorspezifische Größe ableitet.

Dies erfolgt über die Verbindung 27 zwischen dem Ultraschallsensor 5 und der Meßgerätelektronik 3, über die die Vorrichtung den Ultraschallsensor 5 in Schwingung versetzen und dessen Schwingungsverhalten aufnehmen kann.

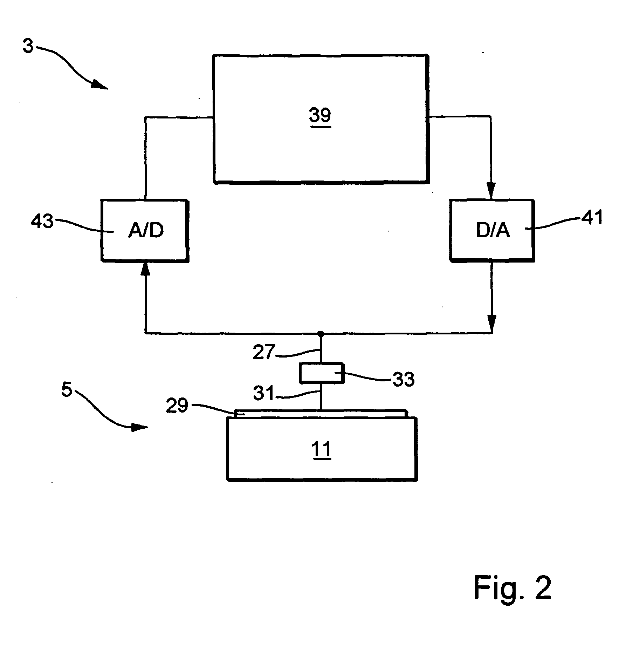

Fig. 2 zeigt ein Ausführungsbeispiel für einen Schaltplan einer über die Verbindung 27 an den Ultraschallsensor 5 angeschlossenen Meßgerätelektronik 3. Sie umfaßt einen digitalen Signalprozessor 39. Der digitale Signalprozessor 39 ist über einen Digital-Analog-Wandler 41 und die Verbindungsleitung 27 mit dem Ultraschallsensor 5 verbunden. Der digitale Signalprozessor 39 kann digitale Signale erzeugen, die über den Digital-Analog-Wandler 41 in analoge Signale umgewandelt werden und in analoger Form am Utraschallsensor 5 anliegen. Die analogen Signale versetzen das piezoelektrisches Element 11 in Schwingungen.

Das Schwingungsverhalten des Ultraschallsensors 5 wird bei der dargestellten Schaltung über die Verbindung 27 einem daran angeschlossenen Analog-Digital-Wandler 43 zugeführt, der die eingehenden Signale digitalisiert und dem digitalen Signalprozessor 39 zuführt.

Werden Ultraschallsignale, wie sie heute in der Ultraschallmeßtechnik üblicherweise eingesetzt werden, im Bereich von 1 kHz bis 200 kHz gesendet und/oder empfangen, so können handelsübliche Analog-Digital-Wandler und Digital-Analog-Wandler mit Abtastraten von etwa 1 MHz eingesetzt werden. Heute sind digitale Signalprozessoren mit Taktraten von einigen Gigahertz im Handel erhältlich, die ausreichend schnell arbeiten, um nicht nur die Signale zur Anregung des Ultraschallsensors 5 bereitstellen zu können, sondern auch das Schwingungsverhalten des Ultraschallsensors 5 unmittelbar aufzeichnen und verarbeiten zu können.

Wird das Meßgerät als Füllstandsmeßgerät eingesetzt, so wird beispielsweise auf die zuvor beschriebene Weise ein kurzer Ultraschallwellenpuls generiert, der vom Ultraschallsensor 5 in Richtung des Füllgutes gesendet wird. Es wird nach einer füllstands-abhängigen Laufzeit, dessen Echosignal empfangen und mittels des digitalen Signalprozessors 39 ausgewertet.

In dem dargestellten Ausführungsbeispiel ist die Vorrichtung zur Erkennung des angeschlossenen Ultraschallsensors vorzugsweise in dem digitalen Signalprozessor 39 integriert. Hierzu kann beispielsweise ein Programm vorgesehen sein, das beim Einschalten des Meßgeräts vor der ersten Messung durchlaufen wird.

Das Programm dient dazu, ein Verfahren zur Erkennung des an das Meßgerät angeschlossenen Ultraschallsensors 5 auszuführen. Dabei sind verschiedene Verfahren möglich, die den Ultraschallsensor in Schwingung versetzen, dessen Schwingungsverhalten aufnehmen und daraus eine sensorspezifische Größe ableiten.

Ultraschallsensoren sind schwingungsfähige gedämpfte Systeme, deren Schwingungseigenschaften im Wesentlichen durch deren Güte Q und eine Eigenfrequenz $f_0$ des entsprechenden ungedämpften Systems bestimmt sind.

Versetzt man den Ultraschallsensor 5, bzw. genauer das piezoelektrische Element 11 in Schwingungen mit einem Signal S der Form

$$S = A_s \cos(2\pi f\, t)$$

worin

$A_s$      die Amplitude der Anregung,
$f$      die Frequenz der Anregung, und
$t$      die Zeit bedeuten,

so führt der Ultraschallsensor nach einem Einschwingvorgang eine erzwungene Schwingung der Form

$$x(t) = A(A_S, f, f_0, Q) \cos(2\pi f\, t - \alpha(f, f_0, Q))\ \text{aus,}$$

worin

$A(A_S, f, f_0, Q)$      die von der Amplitude $A_S$ der Anregung, der Frequenz $f$ der Anregung, der Eigenfrequenz $f_0$, und der Güte Q des Systems abhängige Amplitude der erzwungenen Schwingung, und

$\alpha(f, f_0, Q)$      die von der Frequenz $f$ der Anregung, der Eigenfrequenz $f_0$, und der Güte Q des Systems abhängige Phase bedeuten.

Die Amplitude $A(A_S, f, f_0, Q)$ der erzwungenen Schwingung ist maximal, wenn mit der Resonanzfrequenz $f_{res}$ angeregt wird, die sich gemäß der nachfolgenden Gleichung aus der Eigenfrequenz $f_0$ und der Güte Q bestimmt:

$$f_{res} = f_0\,(1-1/(2Q^2))^{1/2}$$

Stellt man zu einem Zeitpunkt $t_0$ die Anregung ab, so schwingt das gedämpfte System gemäß nachfolgender Formel aus:

$$x_d(t) = e^{-(t-t0)/\tau}\,A(A_S, f, f_0, Q)\cos(2\pi f_d(t-t_0) - \alpha_d)$$

worin

$\tau = Q/(\pi f_0)$      die Abklingzeit,
$f_d = f_0\,(1-1/(4Q^2))^{1/2}$      die Frequenz, und
$\alpha_d$      eine von Anfangsbedingungen abhängige Phase bedeuten.

Anhand des Schwingungsverhaltens läßt sich der angeschlossene Ultraschallsensor 5 zweifelsfrei identifizieren. Bei der Identifizierung des Ultraschallsensors 5 wird auf eine sensorspezifische Größe des Ultraschallsensors 5, z.B. eine unter vorgegebenen Bedingungen sich einstellende Amplitude A der Schwingung, dessen Abklingzeit $\tau$, dessen Eigenfrequenz $f_0$ oder dessen Resonanzfrequenz $f_{res}$ abgestellt.

Nachfolgend werden vier Ausführungsbeispiele für Verfahren zur Erkennung des angeschlossenen Ultraschallsensors 5 beschrieben, die mit dem zuvor beschriebenen erfindungsgemäßen Meßgerät ausführbar sind.

Gemäß einem ersten Verfahren wird der Ultraschallsensor mit einer vorgegebenen Frequenz f und einer vorgegebenen Amplitude $A_s$ zu Schwingungen angeregt. Es wird die Amplitude A(T) der Schwingung des Ultraschallsensors 5 nach einer festen Zeit T nach Beenden der Anregung aufgenommen. Diese Amplitude A(T) ist eine sensorspezifische Größe, anhand derer der angeschlossene Ultraschallsensor 5 bestimmbar ist. Dies geschieht vorzugsweise, indem für alle vorgesehenen unterschiedlichen Ultraschallsensoren 5 vorab die Amplitude A(T) aufgezeichnet wird, mit der diese nach Ablauf der festen Zeit T nach Beendigung der oben beschriebenen Anregung mit der vorgegebenen Frequenz f und der vorgegebenen Amplitude $A_s$ schwingen. Die Amplitude A(T) wird für jeden Ultraschallsensor in einer Tabelle im Meßgerät abgelegt.

Bei der Erkennung des angeschlossenen Ultraschallsensors 5 wird nachfolgend der mit diesem Ultraschallsensor 5 aufgenommene sensorspezifische Wert der Amplitude A(T) mit den in der Tabelle abgelegten Werten verglichen. Aus dem Vergleich ergibt sich unmittelbar, welcher Ultraschallsensor 5 angeschlossen ist.

Dieses Verfahren bietet sich besonders in solchen Fällen an, in denen die Abklingzeiten der anschließbaren Ultraschallsensoren 5 etwa gleich sind.

Ist der angeschlossene Ultraschallsensor 5 einmal ermittelt, wird dieser durch die Meßgerätelektronik 3 in einem nachfolgenden Meßbetrieb in einer für diesen Ultraschallsensor 5 optimalen Form angeregt.

Gemäß einem zweiten Verfahren zur Erkennung des angeschlossenen Ultraschallsensors 5 wird der Ultraschallsensor 5 zu Schwingungen angeregt.

Dabei müssen Amplitude $A_s$ und Frequenz f der Anregung nicht fest vorgegeben sein.

Nach Beenden der Anregung wird eine Entwicklung der Amplitude der Schwingung des angeschlossenen Ultraschallsensors 5 über einen Zeitraum aufgenommen und aus der Entwicklung eine Abklingzeit $\tau$ bestimmt. Wie bereits oben angegeben fällt die Amplitude beim Ausschwingen exponentiell mit der Abklingzeit $\tau$ ab.

Dieses Verfahren bietet sich besonders dann an, wenn die anschließbaren Ultraschallsensoren ähnliche Güten Q aufweisen.

Die Abklingzeit $\tau$ kann beispielsweise bestimmt werden, indem nach Beendigung der Anregung an zwei unterschiedlichen Zeitpunkten t1 und t2 die Amplitude A(t1) und A(t2) gemessen wird. Die Abklingzeit $\tau$ bestimmt sich dann gemäß der Gleichung:

$$\tau = (t2 - t1)/ \ln (A(t2)/A(t1))$$

Die Abklingzeit $\tau$ ist eine sensorspezifische Größe, anhand derer der angeschlossene Ultraschallsensor 5 einwandfrei identifizierbar ist. Hierzu wird vorzugsweise zuvor eine Tabelle der Abklingzeiten $\tau$ der unterschiedlichen anschließbaren Ultraschallsensoren 5 angelegt und in einem Speicher im Meßgerät abgelegt. Die Erkennung des angeschlossenen Ultraschallsensors 5 erfolgt dann, indem die gemessene Abkingzeit $\tau$ mit den in der Tabelle abgelegten sensorspezifischen Abklingzeiten $\tau$ verglichen wird.

Gemäß einem weiteren Verfahren zur Erkennung des angeschlossenen Ultraschallsensors 5 wird der Ultraschallsensor 5 mit einer beliebigen Frequenz und einer beliebigen Amplitude zu Schwingungen angeregt. Nach Beenden der Anregung wird eine Frequenz $f_d$ oder eine Periodendauer $T_d$ der Schwingung des Ultraschallsensors aufgenommen. Frequenz $f_d$ und Periodendauer $T_d$ sind umgekehrt proportional zueinander und hängen wie oben angegeben von der Eigenfrequenz $f_0$ und der Güte Q des Ultraschallsensors 5 ab. Entsprechend stellen sie sensorspezifische Größen dar, die zur Erkennung des angeschlossenen Ultraschallsensors 5 geeignet sind. Frequenz $f_d$ oder Periodendauer $T_d$ können beispielsweise bestimmt werden, indem nach Beenden der Anregung ein Amplitudenverlauf der Schwingung aufgezeichnet wird. Anhand von Nulldurchgängen und/oder der Lage von Minima und Maxima des Amplitudenverlaufs können beide Größen ermittelt werden.

Die sensorspezifischen Frequenzen $f_d$ und/oder Periodendauern $T_d$ sind vorzugsweise vorab für alle vorgesehenen Ultraschallsensoren 5 bestimmt und in einer Tabelle abgelegt worden. Durch einen Vergleich der gemessenen Werte mit den in der Tabelle abgelegten Werten läßt sich der angeschlossene Ultraschallsensor 5 erkennen.

Gemäß einem weiteren Verfahren zur Erkennung des angeschlossenen Ultraschallsensors 5 wird der Ultraschallsensor 5 mit einer vorgegebenen Frequenz f und einer vorgegebenen Amplitude $A_s$ zu Schwingungen angeregt. Nach Beenden der Anregung werden die Signale des Ultraschallsensors 5 für einen vorgegebenen Zeitraum aufgenommen, und es wird daraus ein Maß für eine Schwingungsenergie des Ultraschallsensor 5 während dieses Zeitraums abgeleitet. Dieses Maß für die Schwingungsenergie bildet eine sensorspezifische Größe, anhand derer der angeschlossene Ultraschallsensor 5 erkennbar ist. Dabei wird der physikalische Effekt ausgenutzt, daß umso mehr Schwingungsenergie auf den Ultraschallsensor 5 übertragen und von diesem wieder abgegeben wird, je näher die vorgegebene Frequenz f, mit der angeregt wird, an dessen Resonanzfrequenz $f_{res}$ liegt.

Vorzugsweise wird dieses Maß für die Schwingungsenergie bestimmt, indem die Signale des Ultraschallsensors 5 während des vorgegebenen Zeitraums gleichgerichtet werden. Dies ergibt eine Signalamplitude als Funktion der Zeit.

Ein Integral über die so bestimmte Signalamplitude über den vorgegebenen Zeitraum ergibt ein Maß für die Schwingungsenergie. Alternativ kann eine Einhüllende für die gleichgerichteten Signale bestimmt und das Integral über die Einhüllende berechnen werden.

Analog zu den zuvor beschriebenen Verfahren, wird auch hier vorab für alle einsetzbaren unterschiedlichen Ultraschallsensoren 5 das Maß für die Schwingungsenergie bestimmt und im Meßgerät abgelegt. Ein einfacher Vergleich des gemessenen Wertes mit den zuvor abgelegten Werten ergibt dann eine eindeutige Identifizierung des angeschlossenen Ultraschallsensors. Bei dem in Fig. 2 dargestellten Ausführungsbeispiel wird die gesamte Signalanregung und Signalverarbeitung in digitaler Form vorgenommen. Es ist aber auch möglich, erfindungsgemäße Meßgeräte mit einer weitgehend analogen Signalanregung und Signalverarbeitung auszustatten.

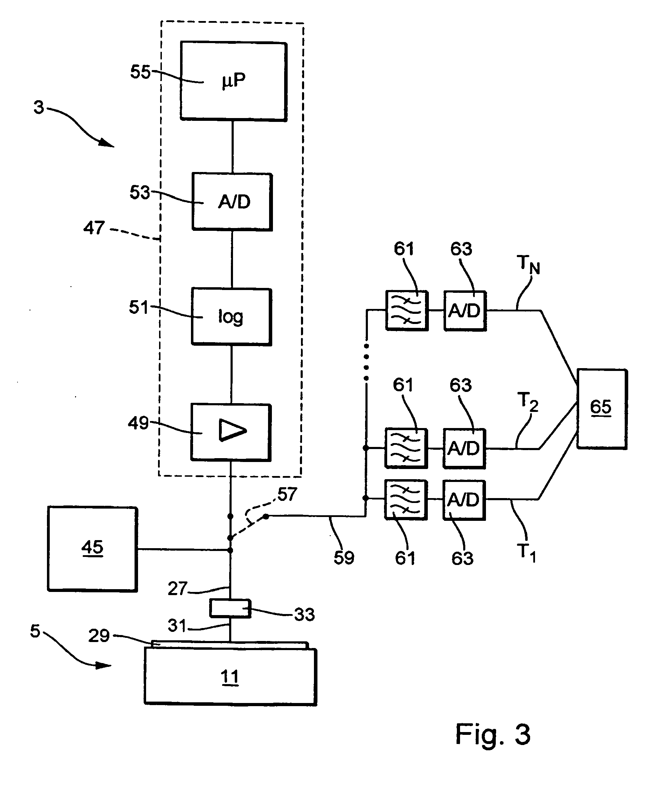

Ein Ausführungsbeispiel für einen Schaltplan eines solchen Meßgeräts ist in Fig. 3 dargestellt. Fig. 3 zeigt einen Schaltplan einer Meßgerätelektronik 3 mit einer Sendesignalerzeugung 45 und einer Empfangsschaltung 47, wie sie in herkömmlichen Meßgeräten ebenfalls eingesetzt wird.

Die Sendesignalerzeugung 45 erzeugt z.B. kurze Pulse mit der Resonanzfrequenz $f_{res}$ des jeweils angeschlossenen Ultraschallsensors 5. Die erzeugten Signale liegen über die Verbindungsleitung 27 am Ultraschallsensor 5 an. Entsprechend werden vom Ultraschallsensor 5 empfangene Signale über die Verbindungsleitung 27 der Empfangsschaltung 47 zugeführt.

Die Empfangsschaltung 47 weist einen Verstärker 49 und einen diesem nachgeschalteten Logarithmierer 51 auf. Die durch die Logarithmierung gestreckten Signale werden einem Analog-Digital-Wandler 53 und von diesem einem Mikroprozessor 55 zur Auswertung und/oder Verarbeitung zur Verfügung gestellt. Aufgrund der analogen Vorverarbeitung der eingehenden Signale genügt ein Analog-Digital-Wandler mit einer Abtastrate von weniger als 100 kHz.

Erfindungsgemäß umfaßt das Meßgerät eine Vorrichtung zur Erkennung des angeschlossenen Ultraschallsensors, die zur Erkennung des Ultraschallsensors 5 den Ultraschallsensor 5 in Schwingung versetzt, dessen Schwingverhalten aufnimmt und daraus eine sensorspezifische Größe ableitet.

Diese Vorrichtung umfaßt eine Einrichtung, durch die der angeschlossene Ultraschallsensor 5 zu Schwingungen anregbar ist. Vorzugsweise ist diese Einrichtung die Sendesignalerzeugung 45, die ohnehin an den Ultraschallsensor 5 angeschlossen ist.

Weiter umfaßt die Vorrichtung für jeden Ultraschallsensor 5, den sie erkennen kann, einen zugeordneten Testzweig T1 ... TN, an den vom jeweils angeschlossenen Ultraschallsensor 5 aufgenommene Signale anlegbar sind. Hierzu ist ein Schalter 57 vorgesehen, über den die vom Ultraschallsensor 5 aufgenommenen Signale wahlweise der Empfangsschaltung 47 oder einer Zuleitung 59 zu den Testzweigen T1 ... TN zugeführt werden.

Die unterschiedlichen anschließbaren Ultraschallsensoren 5 unterscheiden sich durch deren Resonanzfrequenzen $f_{res}$.

Entsprechend weist jeder Testzweig T1 ... TN einen Bandpassfilter 61 auf, der für die Resonanzfrequenz $f_{res}$ des zugeordneten Ultraschallsensor 5 durchlässig ist. Jeder Testzweig T1 ... TN weist eine Aufnahmeeinheit auf, die durch den Bandpassfilter 61 hindurch gelangende Signale aufnimmt.

In dem dargestellten Ausführungsbeispiel umfaßt die Aufnahmeeinheit Analog-Digital-Wandler 63, die den Bandpassfiltern 61 nachgeschaltet sind. Die Analog-Digital-Wandler 63 speisen die ihnen zugeführten Signale in digitalisierter Form in einen Mikroprozessor 65 ein, der ebenfalls Bestandteil der Aufnahmeeinheit ist.

In dem dargestellten Ausführungsbeispiel sind die Miroprozessoren 55 und 65 zwei separate Bauteile, es ist jedoch auch möglich, stattdessen nur einen einzigen Mikroprozessor vorzusehen, der die beiden Mikroprozessoren 55 und 65 ersetzt.

Wird der Ultraschallsensor 5 mit einem ein breites Frequenzspektrum aufweisenden Signal zu Schwingungen angeregt, so wird er im Bereich von dessen Resonanzfrequenz $f_{res}$ am meisten Schwingungsenergie aufnehmen und nachfolgend beim Ausschwingen auch in diesem Frequenzbereich wieder abgeben. Entsprechend wird in demjenigen Testzweig T, in dem die Resonanzfrequenz $f_{res}$ des gerade angeschlossenen Ultraschallsensors 5 herausgefiltert wird, die größte Signalleistung vorliegen. Dieser Testzweig T wird mittels des Mikroprozessors 65 ermittelt. Dabei kann beispielsweise derjenige Testzweig T mit der größten Signalamplitude bestimmt werden. Ebenso kann für jeden Testzweig T die Signalamplitude über einen vorgegebenen Zeitraum aufintegriert werden. Ist der Testzweig T bekannt, so ist auch der angeschlossene Ultraschallsensor 5 erkannt.

Das Meßgerät erkennt selbsttätig, welcher Ultraschallsensor 5 angeschlossen ist. Vorzugsweise erfolgt die Erkennung des angeschlossenen Ultraschallsensors 5 automatisch nach jedem Einschalten des Meßgeräts. Ist der Ultraschallsensor 5 erkannt, wird er im Meßbetrieb zum Senden vorzugsweise mit dessen Resonanzfrequenz fres angeregt, da bei dieser Frequenz eine hohe Sendeleistung erzielbar ist und Verlustleistungen gering sind.

**Patentansprüche**

1. Meßgerät zur Bestimmung des Füllstands eines Füllguts in einem Behälter oder in einem offenen Gerinne mit einem Ultraschallsensor (5) und mit einer Meßgeräteelektronik (3), wobei der Ultraschallsensor (5) ein Ultraschallsignal in Richtung des Füllguts sendet und das an der Oberfläche des Füllguts reflektierte Ultraschallsignal empfängt, und wobei die Meßgeräteelektronik (3) aus der füllstandsabhängigen Laufzeit des Ultraschallsignals vom Ultraschallsensor (5) zur Oberfläche des Füllguts und zurück den Füllstand ermittelt, wobei an die Meßgeräteelektronik (3) über eine Verbindung (27) unterschiedliche Ultraschallsensoren (5), die unterschiedliche sensorspezifische Größen aufweisen, anschließbar sind, wobei eine Erkennungsvorrichtung zur Erkennung des jeweils angeschlossenen Ultraschallsensors (5) vorgesehen ist, die den Ultraschallsensor (5) In Schwingung versetzt, dessen Schwingungsverhalten aufnimmt, anhand des Schwingungsverhaltens eine sensorspezifische Größe ableitet, wobei es sich bei der sensorspezifischen Größe um die Amplitude (A), die Abklingzeit ($\tau$), die Eigenfrequenz (fo), die Resonanzfrequenz (fres), die gemessene Frequenz (fd) nach Beenden der Anregung, die Periodendauer (Td), die Güte (Q) oder die Schwingungsenergie der Schwingung des Ultraschallsensors (5) handelt, und anhand eines Vergleichs der abgeleiteten sensorspezifischen Größe mit einer entsprechenden abgespeicherten sensorspezifischen Größe den jeweils angeschlossenen Ultraschallsensor (5) erkennt.

2. Füllstandsmeßgerät nach Anspruch 1, bei dem eine Verbindung (27) zwischen dem Ultraschallsensor (5) und der Meßgerätelektronik (3) besteht, über die der Ultraschallsensor (5) im Meßbetrieb angeschlossen ist.

3. Verfahren zur Erkennung eines an das Füllstandsmeßgerät gemäß einem der Ansprüche 1 oder 2 angeschlossenen Ultraschallsensors (5), bei dem

   - der Ultraschallsensor (5) mit einer vorgegebenen Frequenz (f) und einer vorgegebenen Amplitude (As) zu Schwingungen angeregt wird,
   - nach einer festen Zeit (T) nach Beenden der Anregung eine sensorspezifische Größe aufgenommen wird, wobei es sich bei der sensorspezifischen Größe um die Amplitude (A), die Abklingzeit ($\tau$), die Eigenfrequenz (fo), die Resonanzfrequenz (fres), die gemessene Frequenz (fd) nach Beenden der Anregung, die Periodendauer (Td), die Güte (Q) oder die Schwingungsenergie der Schwingung des Ultraschallsensors (5) handelt, und
   - anhand der sensorspezifischen Größe der Ultraschallsensor (5) bestimmt wird, indem die sensorspezifische Größe mit einer in einer Tabelle abgelegten sensorspezifischen Größe verglichen wird.

4. Verfahren nach Anspruch 3, bei dem

   - nach einer festen Zeit (T) nach Beenden der Anregung die Amplitude (A(T)) der Schwingung als sensorspezifische Größe des Ultraschallsensors (5) aufgenommen wird und
   - anhand der Amplitude (A(T)) der Ultraschallsensor (5) bestimmt wird, indem die Amplitude (A(T)) mit in einer Tabelle abgelegten sensorspezifischen Amplituden verglichen wird.

5. Verfahren nach Anspruch 3, bei dem

   - nach Beenden der Anregung eine Entwicklung der Amplitude (A) der Schwingung des Ultraschallsensors (5) aufgenommen wird,
   - aus der Entwicklung eine Abklingzeit ($\tau$) mit der die Amplitude (A) exponentiell abnimmt als sensorspezifische Größe bestimmt wird, und
   - mittels der Abklingzeit ($\tau$) der Ultraschallsensor (5) bestimmt wird, indem die Abklingzeit ($\tau$) mit in einer Tabelle abgelegten sensorspezifischen Abklingzeiten ($\tau$) verglichen wird.

6. Verfahren nach Anspruch 3, bei dem

   - nach Beenden der Anregung eine Frequenz ($f_d$) oder eine Periodendauer ($T_d$) der Schwingung des Ultraschallsensors (5) aufgenommen wird.

7. Verfahren nach Anspruch 3, bei dem

   - der Ultraschallsensor (5) mit einer vorgegebenen Frequenz (f) und einer vorgegebenen Amplitude ($A_s$) zu Schwingungen angeregt wird,
   - nach Beenden der Anregung die Signale des Ultraschallsensors (5) für einen vorgegebenen Zeitraum aufgenommen werden, und
   - daraus ein Maß für eine Schwingungsenergie des Ultraschallsensors (5) während dieses Zeitraums abgeleitet wird,

- anhand dessen der Ultraschallsensor (5) erkannt wird.

8. Verfahren gemäß Anspruch 7, bei dem

   - die Signale gleichgerichtet werden, und
   - ein Integral über die gleichgerichteten Signale oder eine die gleichgerichteten Signale Einhüllende berechnet wird.

9. Füllstandsmeßgerät nach Anspruch 1, bei dem

   - die Vorrichtung eine Einrichtung umfaßt, durch die der angeschlossene Ultraschallsensor (5) zu Schwingungen anregbar ist,
   - die Vorrichtung für jeden Ultraschallsensor (5), den sie erkennen kann, einen zugeordneten Testzweig (T1 ... TN) aufweist, an den vom jeweils angeschlossenen Ultraschallsensor (5) aufgenommene Signal anlegbar sind,
   - jeder Testzweig (T1 ... TN) einen Bandpassfilter (61) aufweist, der für eine Resonanzfrequenz ($f_{res}$) des zugeordneten Ultraschallsensors (5) durchlässig ist, und
   - jeder Testzweig (T1 ... TN) eine Aufnahmeeinheit aufweist, die hindurch gelangende Signale aufnimmt.

**Claims**

1. Measuring device for determining the level of a medium in a container or in an open channel with an ultrasonic sensor (5) and with measuring device electronics (3), whereby the ultrasonic sensor (5) sends an ultrasonic signal in the direction of the medium and receives the ultrasonic signal reflected at the surface of the medium; whereby the measuring device electronics (3) determine the level of the medium on the basis of the time-of-flight of the ultrasonic signal from the ultrasonic sensor (5) to the surface of the medium and back, said time-of-flight being dependent on the level; and whereby different ultrasonic sensors (5), which have different sensor-specific variables, can be connected to the measuring device electronics (3) via a connection (27); whereby a detector is provided to detect the ultrasonic sensor (5) connected, said detector causing the ultrasonic sensor (5) to oscillate, records this oscillation behavior, derives a sensor-specific variable from the oscillation behavior - whereby the sensor-specific variable is the amplitude (A), the decay time ($\tau$), the natural frequency (fo), the resonating frequency (fres), the measured frequency (fd) at the end of the oscillation, the duration (Td), the quality (Q) or the oscillating energy of the oscillation of the ultrasonic sensor (5) - and detects the connected ultrasonic sensor (5) by comparing the derived sensor-specific variable with a saved sensor-specific variable.

2. Level measuring device as per Claim 1, **characterized in that** a connection (27) exists between the ultrasonic sensor (5) and the measuring device electronics (3) via which the ultrasonic sensor (5) is connected in measuring mode.

3. Method for detecting an ultrasonic sensor (5) connected to the level measuring device as per one of the claims 1 or 2, in which:

   - the ultrasonic sensor (5) is excited to oscillate at a predetermined frequency (f) and a predetermined amplitude (As)
   - a sensor-specific variable is recorded after a set time (T) following completion of the oscillation process, said sensor-specific variable being the amplitude (A), the decay time ($\tau$), the natural frequency (fo), the resonating frequency (fres), the measured frequency (fd) at the end of the oscillation, the duration (Td), the quality (Q) or the oscillating energy of the oscillation of the ultrasonic sensor (5)
   - the sensor-specific variable is used to determine the ultrasonic sensor (5) by comparing the sensor-specific variable to a sensor-specific variable saved in a table.

4. Method as per Claim 3, in which:

   - the amplitude (A(T)) of the oscillation is recorded as a sensor-specific variable of the ultrasonic sensor (5) after a set time (T) following completion of the oscillation process and
   - the amplitude (A(T)) of the ultrasonic sensor (5) is determined by comparing the amplitude (A(T)) to sensor-specific amplitudes saved in a table.

**5.** Method as per Claim 3, in which:

   - on completion of the oscillation, a trend for the amplitude (A) of the oscillation of the ultrasonic sensor (5) is recorded
   - from this trend, a decay time ($\tau$) at which the amplitude (A) is reduced exponentially is determined as a sensor-specific variable and
   - using the decay time ($\tau$), the system determines the ultrasonic sensor (5) by comparing the decay time ($\tau$) to sensor-specific decay times ($\tau$) saved in a table.

**6.** Method as per Claim 3, in which:

   - on completion of the oscillation, a frequency ($f_d$) or a duration ($T_d$) of the oscillation of the ultrasonic sensor (5) is recorded.

**7.** Method as per Claim 3, in which:

   - the ultrasonic sensor (5) is excited to oscillate at a predetermined frequency (f) and a predetermined amplitude ($A_s$)
   - on completion of the oscillation, the signals of the ultrasonic sensor (5) are recorded for a prespecified period and
   - from this information, the system determines an indicator for the oscillation energy of the ultrasonic sensor (5) during this period, on the basis of which the ultrasonic sensor (5) is detected.

**8.** Method as per Claim 7, in which:

   - the signals are rectified and
   - an integral is calculated over the rectified signals, or an envelope over the rectified signals

**9.** Level measuring device as per Claim 1, in which:

   - the device comprises a unit through which the connected ultrasonic sensor (5) can be excited to oscillate
   - the device has an assigned test section (T1 to TN) for every ultrasonic sensor (5) it can detect. Signals recorded from the ultrasonic sensor connected (5) can be applied to this section.
   - every test section (T1 to TN) has a band pass filter (61) which passes a resonating frequency ($f_{res}$) of the assigned ultrasonic sensor (5) and
   - every test section (T1 to TN) has a recording unit that records signals that pass through.


**Revendications**

**1.** Appareil de mesure destiné à la détermination du niveau d'un produit au sein d'un réservoir ou dans un caniveau ouvert à l'aide d'un capteur à ultrasons (5) et d'une électronique d'appareil de mesure (3), le capteur à ultrasons (5) émettant un signal ultrasonore en direction du produit et recevant le signal ultrasonore réfléchi à la surface du produit, et l'électronique d'appareil de terrain (3) déterminant le niveau à partir du temps de propagation - dépendant du niveau - du signal ultrasonore allant du capteur à ultrasons (5) vers la surface du produit et réfléchi par la surface du produit vers le capteur à ultrasons, différents capteurs à ultrasons (5), qui présentent différentes grandeurs spécifiques aux capteurs, pouvant être raccordés à l'électronique d'appareil de terrain (3) par l'intermédiaire d'une liaison (27), un dispositif d'identification étant prévu pour l'identification des capteurs à ultrasons (5) raccordés, lequel excite le convertisseur à ultrasons (5) en vibrations, enregistre son comportement en vibrations, déduit une grandeur spécifique au capteur sur la base du comportement en vibrations, la grandeur spécifique au capteur s'agissant de l'amplitude (A), du temps de décroissance (T), de la fréquence fondamentale (fo), de la fréquence de résonance ($f_{res}$), de la fréquence mesurée ($f_d$) au terme de l'excitation, de la durée de période ($T_d$), de la qualité (Q) ou de l'énergie des vibrations du capteur à ultrasons (5), et le dispositif identifiant chaque capteur à ultrasons (5) raccordé sur la base d'une comparaison de la grandeur spécifique au capteur - déduite - avec une grandeur spécifique au capteur - enregistrée - correspondante.

**2.** Appareil de mesure de niveau selon la revendication 1, pour lequel il existe une liaison (27) entre le capteur à ultrasons (5) et l'électronique d'appareil de mesure (3), par l'intermédiaire de laquelle le capteur à ultrasons (5) est raccordé en mode mesure.

**3.** Procédé destiné à l'identification d'un capteur à ultrasons (5) raccordé à l'appareil de mesure de niveau selon l'une des revendications 1 ou 2, pour lequel

- le capteur à ultrasons (5) est excité en vibrations avec une fréquence (f) prédéfinie et une amplitude ($A_s$) prédéfinie,
- une grandeur spécifique au capteur est enregistrée après un temps fixe (T) au terme de l'excitation, la grandeur spécifique au capteur s'agissant de l'amplitude (A), du temps de décroissance (T), de la fréquence fondamentale (fo), de la fréquence de résonance (tries), de la fréquence mesurée ($f_d$) au terme de l'excitation, de la durée de période ($T_d$), de la qualité (Q) ou de l'énergie des vibrations du capteur à ultrasons (5), et
- pour lequel est déterminé le capteur à ultrasons au moyen de la grandeur spécifique au capteur, en ce que la grandeur spécifique au capteur est comparée avec une grandeur spécifique au capteur enregistrée dans une table.

**4.** Procédé selon la revendication 3, pour lequel

- après un temps fixe (T) au terme de l'excitation, l'amplitude (A(T)) de la vibration est enregistrée en tant que grandeur spécifique au capteur à ultrasons (5) et
- le capteur à ultrasons (5) est déterminé au moyen de l'amplitude (A(T)), en ce que l'amplitude (A(T)) est comparée à une amplitude spécifique au capteur enregistrée dans une table.

**5.** Procédé selon la revendication 3, pour lequel

- est enregistré, au terme de l'excitation, un développement de l'amplitude (A) de la vibration du capteur à ultrasons (5),
- est déterminé à partir de l'amplitude (A) un temps de décroissance (T), avec lequel l'amplitude (A) décroît de manière exponentielle en tant que grandeur spécifique au capteur, et
- est déterminé le capteur à ultrasons (5) au moyen du temps de décroissance (T), en ce que le temps de décroissance (T) est comparé à des temps de décroissance (T) enregistrés dans une table.

**6.** Procédé selon la revendication 3, pour lequel

- est enregistrée, au terme de l'excitation, une fréquence ($f_d$) ou une durée de période ($T_d$) de la vibration du capteur à ultrasons (5).

**7.** Procédé selon la revendication 3, pour lequel

- le capteur à ultrasons (5) est excité en vibrations avec une fréquence (f) prédéfinie et une amplitude ($A_s$) prédéfinie,
- sont enregistrés, au terme de l'excitation, les signaux du capteur à ultrasons (5) pendant une période de temps déterminée, et
- une grandeur décrivant l'énergie de vibration du capteur à ultrasons (5) est déduite pendant cette période de temps,
- au moyen de laquelle le capteur à ultrasons (5) est identifié.

**8.** Procédé selon la revendication 7, pour lequel

- les signaux sont redressés, et
- une intégrale est calculée par le biais des signaux redressés ou d'une enveloppante des signaux redressés.

**9.** Appareil de mesure de niveau selon la revendication 1, pour lequel

- le dispositif comprend un système, qui peut être excité en vibrations par le capteur à ultrasons (5) raccordé,
- le dispositif, pour chaque capteur à ultrasons (5) qu'il est capable d'identifier, présente une branche de test (T1 ... TN) correspondante, sur laquelle est présent le signal enregistré pour chaque capteur à ultrasons (5) raccordé,
- chaque branche de test (T1 ... TN) comporte un filtre passe-bande (61), qui laisse passer la fréquence de résonance ($f_{res}$) du capteur à ultrasons (5) correspondant, et
- chaque branche de test (T1 ... TN) comporte une unité d'enregistrement, qui enregistre les signaux traversant

la branche.

Fig. 1

3

39

43 A/D

D/A 41

27

33

31

29

11

5

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4232719 A